# EUROPÄISCHE PATENTANMELDUNG

(11) **EP 4 119 285 A1**
(43) Veröffentlichungstag der Anmeldung: **18.01.2023**
(21) Anmeldenummer: 22175702.4
(22) Anmeldetag: 27.05.2022
(51) Int. Cl.: B23K 26/382, B23K 26/57, B05B 1/14, B23K 26/0622, B23K 26/06, B29C 59/16, B23K 103/00

(54) **KUNSTSTOFFBEARBEITUNGSVERFAHREN**

(30) Priorität: 01.07.2021 DE 102021117021
(71) Anmelder: Aero Pump GmbH, 65239 Hochheim/Main (DE)
(72) Erfinder: Rother, Sebastian, 55116 Mainz (DE)
(74) Vertreter: Keil & Schaafhausen Patentanwälte PartGmbB

(57) **Zusammenfassung**

Die vorliegende Erfindung betrifft ein Verfahren zum Bearbeiten eines hochtransparenten Kunststoffwerkstücks (5) mit einer ersten Seite (7) und einer zweiten Seite (8) durch Laserablation, wobei eine Laseranordnung (1) einen Laserstrahl (6) emittiert, wobei der Laserstrahl (6) von außen durch die erste Seite (7) in das Kunststoffwerkstück (5) eindringt.

Ziel der Erfindung ist es die Gestaltungsfreiheit zu erhöhen.

Dieses Ziel wird durch das erfindungsgemäße Verfahren erreicht, indem der Laserstrahl (6) zumindest teilweise das Kunststoffwerkstück (5) durchdringt, wobei der Laserstrahl (6) ausgehend von der zweiten Seite (8) einen Teil des Kunststoffwerkstücks (5) verdampft.

## Beschreibung

Die vorliegende Erfindung betrifft ein Verfahren zum Bearbeiten eines hochtransparenten Kunststoffwerkstück mit einer ersten Seite und einer zweiten Seite durch Laserablation, wobei eine Laseranordnung einen Laserstrahl emittiert, wobei der Laserstrahl von außen durch die erste Seite in das Kunststoffwerkstück eindringt.

Als Laserablation, auch Laserverdampfen genannt, wird das Abtragen von Material von einer Oberfläche durch Beschuss mit einem Laserstrahl bezeichnet. Dabei wird durch die Laserstrahlung bzw. den Laserstrahl ein Teil der Oberfläche verdampft. Je nach Ausprägung des Laserstrahls bzw. des Materials des Werkstücks kommt es auch zu einer Plasmaerzeugung, durch die Material an der Oberfläche verdampft und folglich abgetragen wird.

Eine Laseranordnung beschreibt eine Anordnung, durch die ein Laserstrahl erzeugt, geführt und emittiert wird. Die Laseranordnung weist folglich einen Lasererzeugungsapparat, eine Laserführungsanordnung und eine Laserführungseinrichtung auf.

Bei bekannten Kunststoffbearbeitungsverfahren durch Laserablation dringt der Laserstrahl durch die Oberseite in das Kunststoffwerkstück ein und verdampft an der Oberseite des Kunststoffwerkstücks Material. Das verdampfte Material entweicht von der Oberseite ausgehend an die Umgebung. Dabei kann es vorkommen, dass das verdampfte Material mit dem Laserstrahl interagiert, und somit den Laserstrahl beeinflusst. Dies führt zu einer möglichen Fehlerquelle, die es zu vermeiden gilt. Folglich muss bei der Gestaltung der zu erzeugenden Geometrie darauf geachtet werden, dass das verdampfte Material nicht mit dem Laserstrahl interagiert. Dies resultiert in einigen Gestaltungsrichtlinien, durch die die Gestaltungsfreiheit des Werkstücks eingegrenzt wird.

Es ist daher Aufgabe der vorliegenden Erfindung, ein Kunststoffbearbeitungsverfahren mit einer guten Gestaltungsfreiheit vorzuschlagen.

Die Aufgabe wird durch ein Verfahren der eingangs genannten Art gemäß den Merkmalen des Anspruchs 1 gelöst.

Vorteilhafte Ausgestaltungen ergeben sich aus den Unteransprüchen.

Bei dem erfindungsgemäßen Verfahren durchdringt der Laserstrahl zumindest teilweise das Kunststoffwerkstück, wobei der Laserstrahl ausgehend von der zweiten Seite einen Teil des Kunststoffwerkstücks verdampft. Der Laserstrahl durchdringt also das Kunststoffwerkstück teilweise, wobei an der ersten Seite kein Material verdampft wird. Die zweite Seite ist dabei so angeordnet, dass der Laserstrahl ausgehend von der ersten Seite die zweite Seite erreichen kann. Dazu ist die erste Seite beispielsweise im Wesentlichen gegenüber der zweiten Seite angeordnet.

Diese Anordnung hat zur Folge, dass das verdampfte Material nicht mit dem Laserstrahl interagieren kann, so dass der Laserstrahl ungehindert und wiederholgenau Material verdampfen kann. Dies ermöglicht eine große Gestaltungsfreiheit.

Weiterhin wird ein Kunststoffgefüge, das sich um einen verdampften Bereich befindet, verändert, dass diese nicht mehr transparent und somit undurchlässig für den Laserstrahl ist. Das Kunststoffgefüge wird in diesem Bereich "stumpf". Folglich kann der Laserstahl nicht mehr von außen durch das veränderte Kunststoffgefüge in das Kunststoffwerkstück eindringen. Durch das erfindungsgemäße Verfahren wird das Kunststoffwerkstück ausgehend von der zweiten Seite in Richtung der ersten Seite bearbeitet, sodass der Laserstrahl das Kunststoffwerkstück ausgehend von unveränderten Kunststoffgefüge einen zu bearbeitenden Teil des Kunststoffwerkstücks erreicht. Dadurch ist zwischen der ersten Seite und dem zu bearbeitenden Teil des Kunststoffwerkstücks stets transparenter unveränderter Kunststoff Das Kunststoffwerkstück wird somit entgegengesetzt einer Richtung des Laserstrahls bearbeitet. Dadurch ist es möglich jegliche 3D-Strukturen zu schreiben, vorausgesetzt, dass verdampfter Kunststoff in Richtung der zweiten Seite entweichen kann. Dadurch wird eine große Gestaltungsfreiheit erreicht.

Vorzugsweise entweicht der verdampfte Kunststoff nach außen hin. Der durch den Laserstrahl verdampfte Kunststoff entweicht ausgehend von dem Kunststoffwerkstück an eine Umgebung des Kunststoffwerkstücks. Dabei entspricht die Richtung nach außen hin beispielsweise einer Richtung, die von dem Werkstück und/oder dem Laserstrahl weg zeigt. Dadurch wird eine Interaktion zwischen dem Laserstrahl und dem verdampften Teil des Kunststoffwerkstückes vermieden. Dies führt zu einer guten Prozesssicherheit. Weiterhin wird eine gute Gestaltungsfreiheit erreicht.

Vorzugsweise verdampft der Teil des Kunststoffwerkstücks im Bereich eines Fokuspunktes. Der Fokuspunkt beschreibt einen Punkt, in dem der Laserstrahl fokussiert wird. Daher kommt es an diesem Punkt zu einer hohen Leistungsdichte, was eine Verdampfung des Kunststoffwerkstücks in dem Bereich des Fokuspunktes zur Folge hat. Weiterhin wird in diesem Bereich gezielt Energie eingebracht, so dass ein Erwärmen des umgebenden Teils des Kunststoffwerkstücks vermieden wird. Dadurch wird eine Änderung der Morphologie des Kunststoffwerkstücks im Bereich um den Fokuspunkt vermieden, so dass Materialeigenschaften des Kunststoffwerkstücks bestehen bleiben. Folglich kann auf eine Nachbehandlung des Kunststoffwerkstücks verzichtet werden, was zu einer guten Produktivität und Effizienz führt.

Vorzugsweise werden durch das Verfahren Hinterschnitte und/oder tieflochförmige Geometrien hergestellt. Bisherige Gestaltungsmöglichkeiten der in der Einleitung beschriebenen Laserablationverfahren werden um tieflochförmige Geometrien und Hinterschnitte erweitert, sodass neben tieflochförmigen Geometrien und Hinterschnitten auch weitere Geometrien herstellbar sind. Tieflochförmige Geometrien beschreiben beispielsweise Geometrien, deren Länge bzw. Tiefe wesentlich größer als deren Durchmesser ist. So entspricht die Länge beispielsweise mindestens dem Dreifachen des Durchmessers. Hinterschnitte beschreiben Geometrien, bei welchen unbearbeitetes Material entlang von einer Senkrechten einer Kunststoffoberfläche zwischen der Kunststoffoberfläche und einem zu bearbeitenden Teil liegt. Beispielhaft ist für einen Hinterschnitt eine Helix-Geometrie, spiralförmige Geometrie, abweichend zu einem 90° Winkel zur Kunststoffoberfläche angeordnete Kanäle oder der gleichen zu nennen. Da der verdampfte Teil des Kunststoffwerkstücks in Richtung der Umgebung entweichen kann, interagiert der verdampfte Teil des Kunststoffwerkstücks nicht mit dem Laserstrahl, sodass eine Berücksichtigung des verdampften Teils des Kunststoffwerkstücks bei der Konstruktion entfällt und somit die Gestaltungsfreiheit verbessert wird.

Vorzugsweise werden durch das Verfahren Düsenkörper hergestellt. Düsenkörper, die beispielsweise für Sprühdüsen oder dergleichen genutzt werden, benötigen beispielsweise filigrane Geometrien, die durch das beschriebene Verfahren genau eingehalten und hergestellt werden können. Beispielhaft für Düsenkörper sind Doppelstrahldüsen, Hohlkegeldüsen oder einzelstrahldüsen zunennen. Dadurch wird ein Spritzbild des Düsenkörpers verbessert, und eine Gestaltungsfreiheit der Düsenkörper vergrößert.

Vorzugsweise emittiert die Laseranordnung einen hochenergetischen Impuls. Durch den hochenergetischen Impuls wird Energie im Bereich des Fokuspunktes in das Kunststoffwerkstück eingebracht. Dadurch wird Material im Bereich des Fokuspunktes schlagartig verdampft, sodass eine Wärmeeinbringung in das an den Fokuspunkt angrenzende Material geringgehalten wird. Folglich werden die an den Fokuspunkt angrenzenden Bereiche des Kunststoffwerkstückes morphologisch nicht beeinflusst. Folglich behält das Kunststoffwerkstück an den nicht bearbeiteten Flächen gewünschte Materialeigenschaften, so dass eine Nachbehandlung des Kunststoffwerkstücks vermieden werden kann. Dies führt zu einer guten Effizienz.

Vorzugsweise weist der Laserstrahl einen Fokuspunkt auf, dessen Abmessungen im Bereich von 0,001 mm bis 0,25 mm liegen. Durch den Fokuspunkt mit Abmessungen im Bereich von 0,001 mm bis 0,25 mm können Geometrien mit einer Auflösung von 0,001 mm bis 0,25 mm erzeugt werden. Durch diese genaue Auflösung der Geometrien ist es möglich, auch kleine, feine Geometrien herzustellen, die unterhalb einer Auflösung von beispielsweise Spritzgussverfahren liegt. Dadurch wird eine gute Gestaltungsfreiheit erreicht.

Vorzugsweise ist der Fokuspunkt ein erster Fokuspunkt, wobei wenigstens ein zweiter Fokuspunkt benachbart zum ersten Fokuspunkt liegt. Durch diese Fokuspunktanordnung ist es möglich, eine Geometrie aufzubauen bzw. einen Teil des Kunststoffwerkstückes zu verdampfen, so dass der verdampfte Teil eines zweiten Fokuspunktes hin zu dem bereits verdampften Teil des ersten Fokuspunktes entweichen kann. Dabei wird zu erste der Laserstahl am ersten Fokuspunkt fokussiert und anschließend am zweiten Fokuspunkt fokussiert, sodass jeweils ein einzelner Fokuspunkt fokussiert wird. Alternativ dazu kann der Laserstrahl durchgehend emittiert werden, sodass ein Fokuspunkt des durchgehend emittierten Laserstrahls ausgehend von einem ersten Punkt zu einem zweiten Punkt überführt wird, ohne erneut fokussiert zu werden. Dadurch wird ermöglicht, dass auch Hinterschnitte oder dergleichen hergestellt werden können.

Vorzugsweise liegen wenigstens der erste Fokuspunkt und der zweite Fokuspunkt auf einer vorgegebenen Route. Dabei kann die Route weitere Fokuspunkte aufweisen. Dadurch kann eine Abfolge von zu verdampfenden Teilen der verschiedenen Fokuspunkte nacheinander abgefahren werden, wodurch eine gewünschte Geometrie herstellbar ist. Die Fokuspunkte werden in einer zeitlichen Abfolge abgefahren, sodass jeweils ein Fokuspunkt fokussiert ist. Alternativ dazu kann der Laserstrahl durchgehend auf einen Fokuspunkt fokussiert emittiert und entlang der Route verfahren werden. Dabei kann die Route im Vorhinein geplant und definiert werden, um eine optimale Effizienz zu erreichen. Weiterhin kann verdampftes Material durch zuvor abgetragene und/oder verdampfte Bereiche entweichen.

Vorzugsweise wird ein Düsenörper durch ein erfindungsgemäßes Verfahren hergestellt, wobei der Düsenkörper zumindest teilweise hochtransparenten Kunststoff aufweist. Durch das Verfahren können Kanäle bzw. Aussparungen hergestellt werden, die beispielsweise langlochförmige Geometrien, Hinterschnitte oder andere Geometrien aufweisen. Dadurch wird die Gestaltungsfreiheit von Düsenkörpern erhöht.

Vorzugsweise ist der Düsenkörper eine Zerstäubungsdüse. Eine Zerstäubungsdüse zeichnet sich dadurch aus, dass die Flüssigkeit durch wenigstens einen Kanal gepresst wird, und anschließend zerstäubt wird. Je nach Anforderung der Zerstäubungsdüse ist der Kanal unterschiedlich ausgeführt, wobei der Kanal auch an beispielsweise die zu zerstäubende Flüssigkeit angepasst werden soll. Durch das eingesetzte erfindungsgemäße Verfahren kann beispielsweise wenigstens ein Hinterschnitt erzeugt werden, der vorteilhaft für die Zerstäubung der Flüssigkeit ist.

Vorzugsweise weist der Düsenkörper eine Filteranordnung auf. Die Filteranordnung wird durch eine Anzahl von Kanälen gebildet, wobei die Kanäle kleiner sein sollten als zu filternde in der Flüssigkeit befindliche Phasen. Dazu soll die Filteranordnung beispielsweise aus wenigstens einem Kanal bestehen. Dieser Kanal kann durch das vorliegende Verfahren hergestellt werden.

Vorzugsweise weist der Düsenkörper wenigstens einen Kanal auf, der zylindrisch ist und einen größten Durchmesser im Wesentlichen zwischen 0,001 mm und 0,25 mm aufweist. Zylindrisch beschreibt dabei eine Prisma-förmige Geometrie, bei der eine Querschnittsfläche entlang einer definierten Länge konstant ist. Durch das Verfahren ist es möglich, einen ebensolchen zylindrischen Kanal mit den bezeichneten Abmessungen herzustellen. Dies ermöglicht eine große Gestaltungsfreiheit des Düsenkörpers.

Die Erfindung wird im Folgenden anhand eines bevorzugten Ausführungsbeispiels in Verbindung mit der Zeichnung beschrieben. Hierin zeigen:
- Fig. 1: eine schematische Ansicht einer Laseranordnung und eines Kunststoffwerkstücks,
- Fig. 2: eine schematische Ansicht der Laseranordnung mit einem bereits bearbeiteten Kunststoffwerkstück,
- Fig. 3: eine Laseranordnung mit einem weiteren bearbeiteten Kunststoffwerkstück,
- Fig. 4: eine Laseranordnung und ein Kunststoffwerkstück mit einem Tiefloch.
- Fig. 5: eine schematische Darstellung eines Rayleighdüsenkörpers,
- Fig. 6: eine schematische Darstellung einer Filteranordnung.

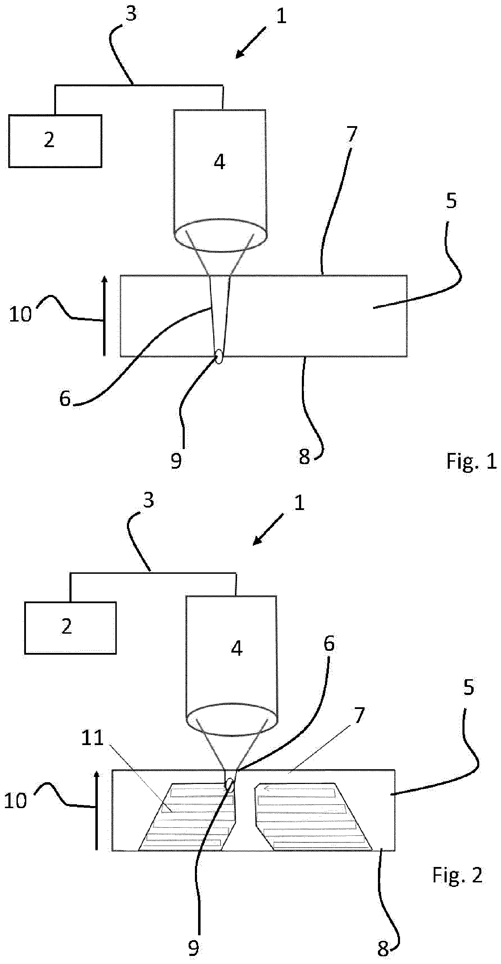

In den Fig. 1 bis 4 ist jeweils eine Laseranordnung 1 mit einer Lasererzeugungseinrichtung 2, einer Laserführungsanordnung 3 und einem Objektiv 4 dargestellt. Weiterhin ist jeweils ein transparentes Kunststoffwerkstück 5 dargestellt.

Die Lasererzeugungseinrichtung 2 erzeugt einen Laserstrahl 6, der durch die Laserführungsanordnung 3 zu dem Objektiv 4 geleitet wird. Ausgehend von dem Objektiv 4 wird der Laserstrahl 6 emittiert. Der Laserstrahl 6 dringt durch eine erste Seite 7 in das Kunststoffwerkstück 5 ein. Dort durchdringt der Laserstrahl 6 das Kunststoffwerkstück 5, bis er an einem Fokuspunkt 9 an einer zweiten Seite 8 des Kunststoffwerkstücks 5 fokussiert wird. Dabei ist eine Verfahrrichtung 10 des Fokuspunkts 9 im Wesentlichen von der zweiten Seite 8 ausgehend in Richtung der ersten Seite 7 vorgesehen.

Fig. 2 zeigt ein bereits teilweise bearbeitetes Kunststoffwerkstück 5, wobei der Fokuspunkt 9 entlang einer Route 11 geführt wird. Dadurch kann der verdampfte Kunststoff entweichen, ohne mit dem Laserstrahl 6 zu interagieren. Auch können Hinterschnitte erzeugt werden.

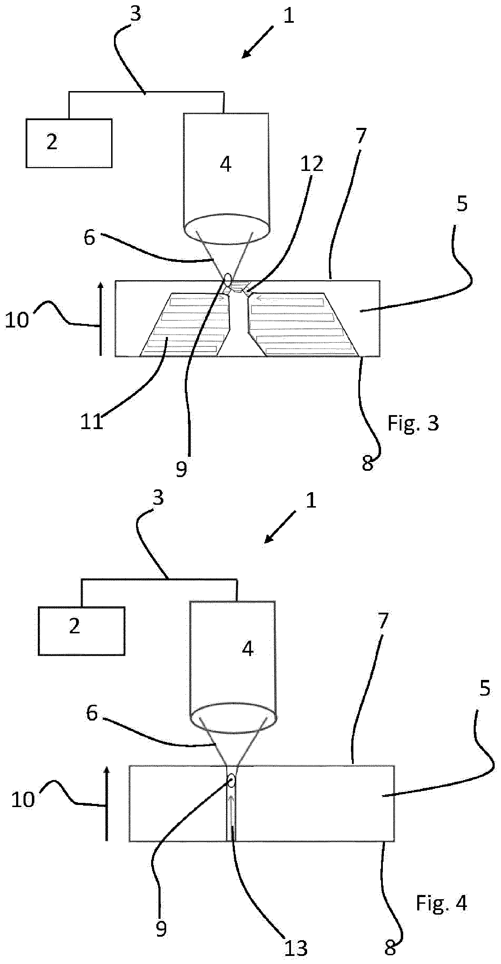

In Fig. 3 ist ein Kunststoffwerkstück 5 dargestellt, das sowohl ausgehend von der zweiten Seite 8 als auch von der ersten Seite 7 bearbeitet wurde. Dazu wird zunächst ausgehend von der zweiten Seite 8 Material verdampft, um anschließend einen Kanal 12 zu formen. Als Letztes wird ausgehend von der ersten Seite 7 die verbleibende Geometrie geformt.

Fig. 4 zeigt ein Kunststoffwerkstück 5, bei dem eine tieflochförmige Geometrie 13 geformt wird. Dazu wird der Fokuspunkt 9 an die zweiten Seite 8 verfahren, um anschließend in Richtung der Verfahrrichtung 10 bewegt zu werden. Der verdampfte Kunststoff kann durch einen bereits bearbeiteten Teil des Kunststoffwerkstücks 5 entweichen. Dadurch interagiert der verdampfte Kunststoff nicht mit dem Laserstrahl 6, so dass die tieflochförmige Geometrie 13 als zylindrische Form ausgebildet werden kann.

Durch das oben beschriebene Verfahren können beispielsweise Düsenkörper und Filteranordnungen erzeugt werden.

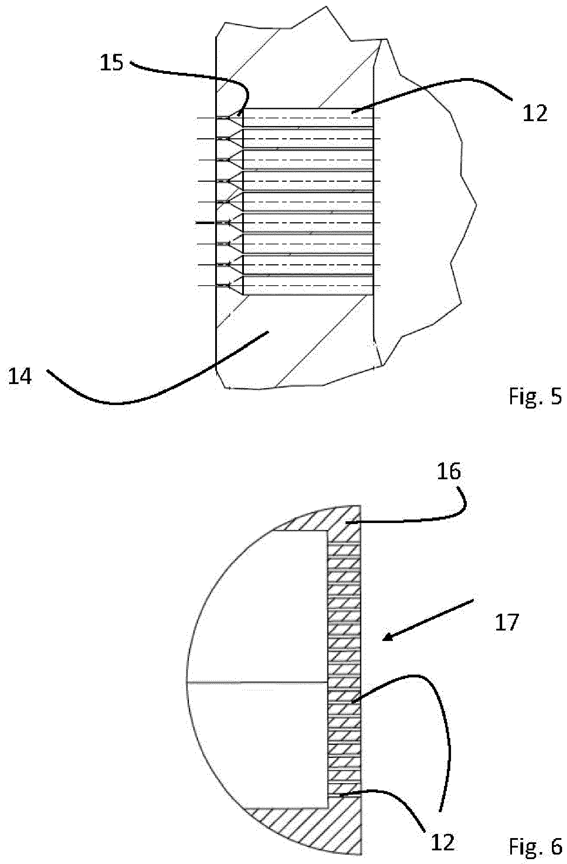

Ein Ausschnitt eines beispielhaften Rayleighdüsenkörpers 14 ist in Fig. 5 dargestellt. Der Rayleighdüsenkörpers 14 weist eine Vielzahl von Kanälen 12 auf, wobei die Kanäle 12 durch eine trichterförmige Geometrie 15 verjüngt werden. Dabei weisen die Kanäle 12, mit Ausnahme der trichterförmigen Geometrie 15, eine zylindrische, tieflochförmige Geometrie auf.

In Fig. 6 ist ein schematischer Ausschnitt eines Düsenkörpers 16 mit einer Filteranordnung 17 dargestellt. Die Filteranordnung 17 weist eine Vielzahl von Kanälen 12 auf, die jeweils eine zylindrische, tieflochförmige Geometrie aufweisen. Die Filteranordnung 17 wird vor eine Düse geschaltet, um kleinste Partikel herauszufiltern und somit ein Verstopfen der Düse zu verhindern.

### Bezugszeichenliste

- 1: Laseranordnung
- 2: Lasererzeugniseinrichtung
- 3: Laserführungsanordnung
- 4: Objektiv
- 5: Kunststoffwerkstück
- 6: Laserstrahl
- 7: erste Seite
- 8: zweite Seite
- 9: Fokuspunkt
- 10: Verfahrrichtung
- 11: Route
- 12: Kanal
- 13: Tieflochförmige Geometrie
- 14: Rayleighdüsenkörper
- 15: Trichterförmige Geometrie
- 16: Düsenkörper
- 17: Filteranordnung

## Patentansprüche

1. Verfahren zum Bearbeiten eines hochtransparenten Kunststoffwerkstücks (5) mit einer ersten Seite (7) und einer zweiten Seite (8) durch Laserablation, wobei eine Laseranordnung (1) einen Laserstrahl (6) emittiert, wobei der Laserstrahl (6) von außen durch die erste Seite (7) in das Kunststoffwerkstück (5) eindringt, **dadurch gekennzeichnet, dass** der Laserstrahl (6) zumindest teilweise das Kunststoffwerkstück (5) durchdringt, wobei der Laserstrahl (6) ausgehend von der zweiten Seite (8) einen Teil des Kunststoffwerkstücks (5) verdampft.

2. Verfahren nach Anspruch 1 **dadurch gekennzeichnet, dass** der verdampfte Kunststoff nach außen hin entweicht.

3. Verfahren nach Anspruch 1 oder 2 **dadurch gekennzeichnet, dass** der Teil des Kunststoffwerkstücks (5) im Bereich eines Fokuspunktes (9) verdampft.

4. Verfahren nach einem der Ansprüche 1 bis 3, **dadurch gekennzeichnet, dass** durch das Verfahren Hinterschnitte und/oder tieflochförmigen Geometrien (13) hergestellt werden.

5. Verfahren nach einem der Ansprüche 1 bis 4, **dadurch gekennzeichnet, dass** durch das Verfahren Düsenkörper (14, 16) hergestellt werden.

6. Verfahren nach einem der Ansprüche 1 bis 5, **dadurch gekennzeichnet, dass** die Laseranordnung (1) einen hochenergetischen Impuls emittiert.

7. Verfahren nach einem der Ansprüche 1 bis 6, **dadurch gekennzeichnet, dass** der Laserstrahls (6) einen Fokuspunkt (9) aufweist, dessen Abmessungen im Bereich von 0,001 mm bis 0,25mm liegen.

8. Verfahren nach einem der Ansprüche 1 bis 7, **dadurch gekennzeichnet, dass** der Fokuspunkt (9) ein erster Fokuspunkt (9) ist, und dass wenigstens ein zweiter Fokuspunkt (9) benachbart zum ersten Fokuspunkt (9) liegt.

9. Verfahren nach einem der Ansprüche 1 bis 8, **dadurch gekennzeichnet, dass** wenigstens der erste Fokuspunkt (9) und der zweite Fokuspunkt (9) auf einer vorgegebenen Route (9) liegen.

10. Düsenkörper hergestellt durch ein Verfahren nach einem der Ansprüche 1 bis 10, **dadurch gekennzeichnet, dass** der Düsenkörper (14, 16) zumindest teilweise hochtransparenten Kunststoff aufweist.

11. Düsenkörper nach Anspruch 10, **dadurch gekennzeichnet, dass** der Düsenkörper (14, 16) ein Zerstäubungsdüsenkörper ist.

12. Düsenkörper nach Anspruch 10 oder 11, **dadurch gekennzeichnet, dass** der Düsenkörper (14, 16) eine Filteranordnung (17) aufweist.

13. Düsenkörper nach einem der Ansprüche 10 bis 12, **dadurch gekennzeichnet, dass** der Düsenkörper (14, 16) wenigstens einen Kanal (12) aufweist, der zylindrisch ist und einen größten Durchmesser im Wesentlichen zwischen 0,001 mm und 0,25mm aufweist.
